# EUROPEAN PATENT APPLICATION

(11) **EP 2 316 724 A2**
(43) Date of publication of application: **04.05.2011**
(21) Application number: 10380110.6
(22) Date of filing: 26.08.2010
(51) Int. Cl.: B64C 1/06, F16B 5/02

(54) **Floating joint system for panels on a support structure**

(30) Priority: 30.10.2009 ES 200930934
(71) Applicant: Airbus Operations, S.L., 28906 Getafe Madrid (ES)
(72) Inventor: Carrasco Carrasco, Rafael, 28906 Getafe (Madrid) (ES)
(74) Representative: Ungria Lopez, Javier

(57) **Abstract**

The joint is at first made through bolts (1) that have a threaded end section (3) coupled to a nut element (4) settled on the inner face of the support structure (5).

It is **characterized in that** the heads of the bolts (1) comprise an annular extension (10) that has a lower flat face (13) settled on an area (11) also flat of the outer free face of the panels (6), the bolts (1) contacting with the panels (6) exclusively through said annular extension (10), existing in this contact at least one sliding surface with low or zero friction coefficient.

With the new system of the invention the use of inlayed washers as conventionally occurs is prevented, while the thickness of the panels can be reduced, achieving a significant saving as for weight and costs.

## Description

### OBJECT OF THE INVENTION

The present invention, as this specification expresses in its title, relates to a floating joint system for panels on a support structure of an aircraft.

The support structure incorporates a series of frames and stringers, while it is covered with detachable and interchangeable panels, which are fixed solidly to the support structure through the floating joint system of the invention.

Starting from this premise, the objective of the invention is to reduce pieces in the joint and especially be able to reduce the thickness of the panels, which supposes a significant saving of weight and costs. In addition, the installation and maintenance times are improved throughout the lifetime of the aircraft. Such panels are made of composite material, as for example, carbon fiber or others.

### BACKGROUND OF THE INVENTION

The area wherein a large amount of equipments and layouts of the different system lines are located consists of a support structure of frames and stringers, covered with detachable and interchangeable panels.

The joint of these panels to the structure is made through countersunk head bolts, including a washer inlayed into the panel to prevent the friction of said head on the panel during the rotation of the bolts in order to avoid damages on the outer surface of such panel.

The joint of the bolt to the panel/structure is designed with floatability between both parts to ensure the interchangeability of the panels (maintainability requirement). Said requirement forces the use of the inlayed washer to ensure the perfect alignment/leveling of the bolt head with the outer aerodynamic surface of the panels, which enables the gain/increase of the aerodynamic drag.

Thus, in aircrafts, the joint of panels is as aforementioned, whereby its dimension, essentially with regard to the thickness, is limited by the geometry presented by the washer embedded into the respective panel. This requires, for meeting the design principles, the panel thickness to be greater than that required by the own dimensions of the calculation, which supposes higher number of fabrics and weigh in the fixation area of the panel to the structure.

### DESCRIPTION OF THE INVENTION

In order to achieve the objectives and avoid the drawbacks mentioned in the preceding paragraphs, the invention proposes a floating joint system for panels on a support structure of frames and stringers which incorporates some bolts and nut elements in order to fix and immobilize the panels on the support structure.

For this purpose, the support structure and the respective panel include opposing holes to insert each bolt. An end section of the bolt includes a threaded part for coupling to the nut element, which butts against the inner face of the support structure.

It is **characterized in that** the head of the bolt, opposite to the threaded part, incorporates an annular extension that in one embodiment is housed in a perimeter recess complementary to the panel which is coaxial with the panel hole, being the perimeter recess located in correspondence with the outer free face of the referred panel.

The annular extension settles on and contacts by its lower flat face with the flat bottom of the mentioned perimeter recess, existing in said contact a sliding surface with low or zero friction grade.

The sliding surface can be incorporated in the bottom of the perimeter recess, into the own annular extension and even into both. Another possibility is that a washer of low thickness can be incorporated in the flat bottom of the perimeter recess, free surface of which will present low or zero friction grade. In substitution for the mentioned washer, a Teflon-based paint can also be incorporated. It is also possible to incorporate the referred washer in the own head of the respective bolt.

The sliding surface greatly facilitates the tightening torque setting for the bolt, so that during its rotation for the tightening, the contact between the annular extension and the sliding flat bottom practically does not interfere in said tightening, thus being the grade of the calculated tightening torque of the bolts more realistic and accurate if it is done using a dynamometer wrench. Additionally, it should be noted that the sliding surface prevents damages on the panel, which will preferably made of composite material, such as carbon fiber.

In another embodiment, perhaps more advantageous, it is expected to dispense with the perimeter recess on the panel, wherewith, the annular extension of the bolt will settle, either directly or with interposition of the aforementioned washer, on a flat area leveled with the outer free face of the panel.

Next, in order to facilitate a better understanding of this specification and being an integral part thereof, figures wherein the object of the invention has been represented with an illustrative and not limitative manner are attached.

### BRIEF DESCRIPTION OF THE DRAWINGS

Figure 1. - Shows a section view of the floating joint system for panels on a support structure, object of the invention.
Figure 2. - Shows an exploded perspective view of an essential part of the system of the invention.
Figure 3. Shows an assembled position view of that represented in the previous figure.

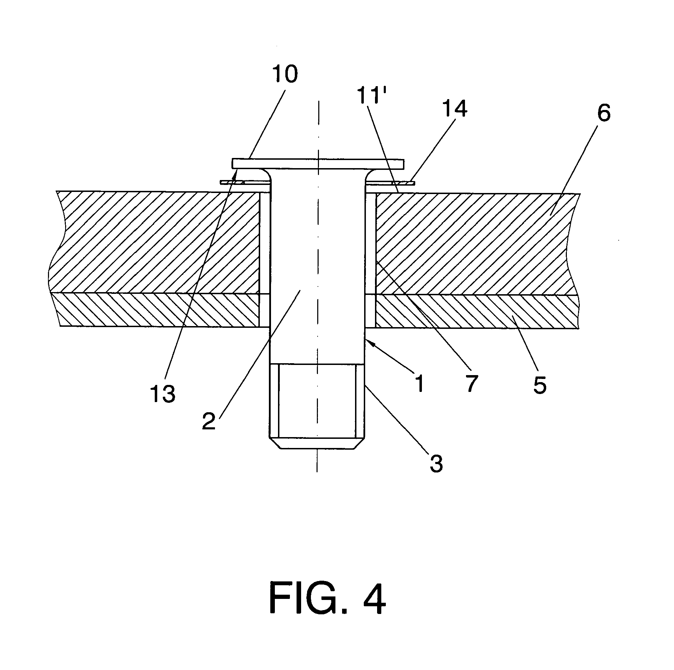

Figure 4. - Shows another embodiment of the invention.

### DESCRIPTION OF THE PREFERRED EMBODIMENT

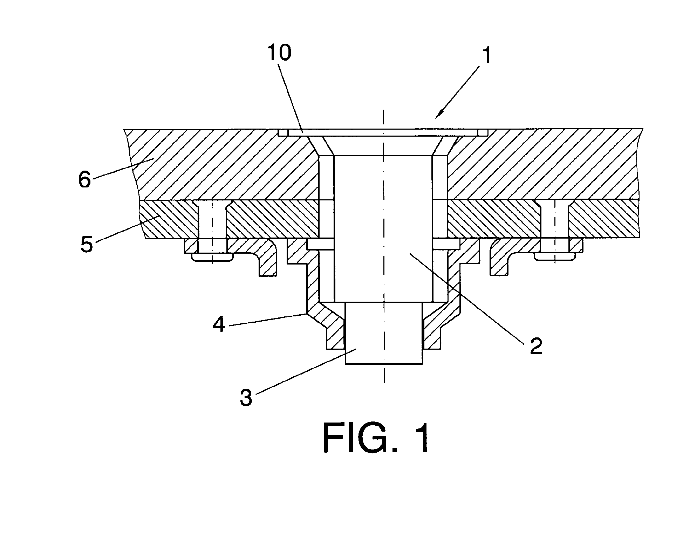

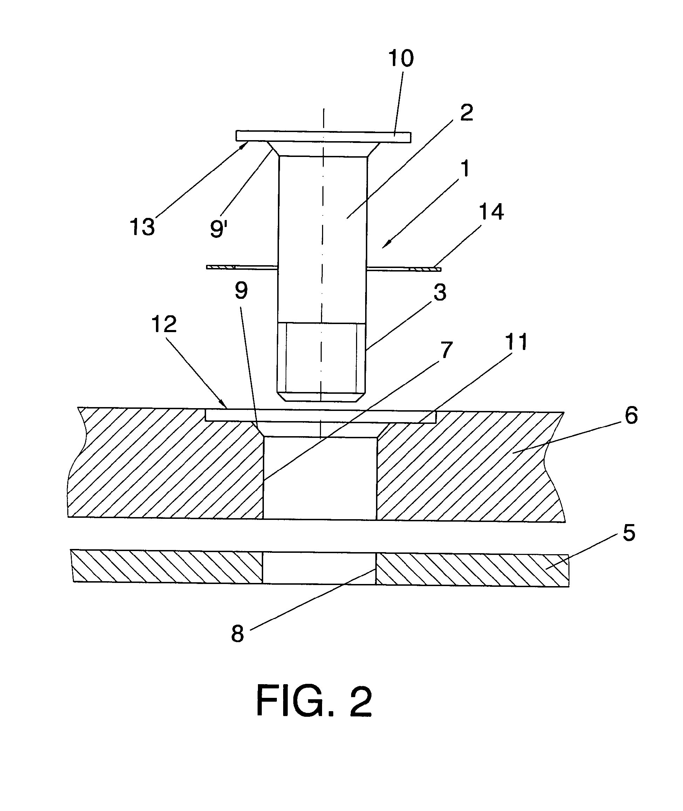

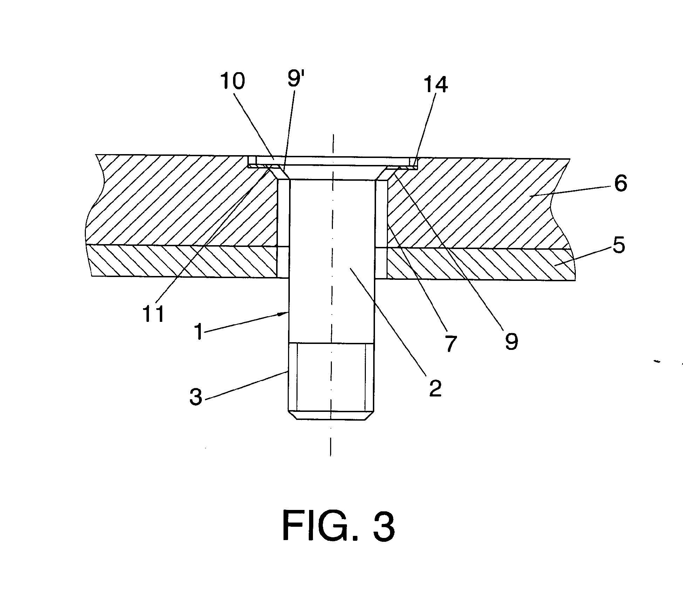

Considering the numbering adopted in figures 1 to 3, the floating joint system for panels on a support structure is at first made through bolts 1 with a threaded end section 3 coupled to a nut element 4 settled on the inner face of the support structure 5 which incorporates frames and stringers.

On the face opposite to the support structure 5 the panels 6 are supported, so that these and said support structure 5 have opposing holes 7 and 8 through which the cylindrical bodies 2 of different bolts 1 are inserted. The head of said bolts comprises an annular extension 10, as a bonnet and with low thickness, that settles on and contacts by its lower flat face with the flat bottom 11 of a perimeter recess 12 established on the outer and free face of the panels 6, the annular extension 10 of the bolts 1 remaining leveled with the outer face of the panels 6, existing in the contact between the annular extension 10 and the bottom of the perimeter recess 12 a sliding surface with low or zero friction grade.

Thus, the bolt 1 assembly exclusively supports on and contacts with the panels 6 through the annular extension 10, and more specifically supports its lower flat face 13 on the flat bottom 11 of the perimeter recess 12 of the panels 6. In this way, all the axial strength of each bolt 1 on the panels 6 is precisely concentrated on the annular extension 10 of the bolts 1.

In a first embodiment, the sliding surface can be directly incorporated in the flat bottom 11 of the perimeter recess12.

In a second embodiment, the sliding surface may comprise a Teflon-based paint arranged over the flat bottom 11 of the perimeter recess 12.

In a third embodiment, the sliding surface may comprise a metallic washer 14 with low thickness (0.2 mm) integrated into the flat bottom 11 of the perimeter recess 12 during the curing process of the respective panel 6, manufactured of composite materials, such as carbon fiber and the like.

In another embodiment, the metallic washer 14 could be integrated in the bolt head in correspondence with its annular extension 10.

The bolt can be manufactured by machining, casting, stud/bonnet welding, superplastic manufacturing with inserted thread, etc.

Thus, as mentioned in the previous paragraphs, the tightening torque of the each bolt 1 assembly is facilitated in order to enable the joint of the panels 6 on the support structure 5.

The confluence of the hole 7 and the outer free face of the panel 6 has a perimeter beveling 9 which is complemented with perimeter thicknessing 9' established on the junction area between the annular extension 10 and the cylindrical body 2 of the bolt. This perimeter thicknessing 9' provides greater mechanical strength in that area of the bolt, preventing any possible deformations of the annular extension 10 at the time of tightening said bolt 1.

On the other hand, it has been expected the possibility for dispensing with the perimeter recess 12 in the panel 6, wherewith, the annular extension 10 of the bolt 1 will settle, either directly or with interposition of the mentioned washer 14, on a flat portion 11' leveled with the outer free face of the panel 6. In this case, the washer will be integrated in that flat portion 15, which in turn may incorporate the sliding surface with low or zero friction coefficient.

## Claims

1. FLOATING JOINT SYSTEM FOR PANELS ON A SUPPORT STRUCTURE, including bolts for fixing the panels on a support structure that incorporates frames and stringers, including such panels and support structure for this purpose opposing holes through with bolts with threaded ends coupled to some nut elements that butt against the inner face of the support structure are inserted, while the opposite ends of the bolts incorporate some heads arranged in correspondence with the outer free face of the panels, **characterized in that** the heads of the bolts (1) comprise an annular extension (10) that has a lower flat face (13) settled on a flat area established in correspondence with outer free face of the panels (6), the bolts (1) contacting with the panels (6) exclusively through said annular extension (10), existing in this contact at least one sliding surface with low or zero friction coefficient.

2. FLOATING JOINT SYSTEM FOR PANELS ON A SUPPORT STRUCTURE, according to claim 1, **characterized in that** the sliding surface is incorporated in the flat area corresponding to the outer free face of the panels (6).

3. FLOATING JOINT SYSTEM FOR PANELS ON A SUPPORT STRUCTURE, according to claim 1, **characterized in that** the sliding surface is incorporated in the lower flat face (13) of the annular extension (10) of the bolts (1).

4. FLOATING JOINT SYSTEM FOR PANELS ON A SUPPORT STRUCTURE, according to claim 1, **characterized in that** the sliding surface is incorporated in the flat area corresponding to the outer free face of the panels (6) and also in the lower flat face (13) of the annular extension (10) of the bolts (1).

5. FLOATING JOINT SYSTEM FOR PANELS ON A SUPPORT STRUCTURE, according to claim 1, **characterized in that** it includes a washer (14) with low thickness intercalated between the annular extension (10) of the bolt (1) and the flat area established in correspondence with the outer free face of the panels (6).

6. FLOATING JOINT SYSTEM FOR PANELS ON A SUPPORT STRUCTURE, according to claim 5, **characterized in that** at least one of the flat faces of the washer (14) incorporates the sliding surface with low or zero friction grade.

7. FLOATING JOINT SYSTEM FOR PANELS ON A SUPPORT STRUCTURE, according to claim 5, **characterized in that** the washer (14) with low thickness is integrated into the flat area established in correspondence with the outer free face of the panels, presenting the free face of said washer (14) the sliding surface.

8. FLOATING JOINT SYSTEM FOR PANELS ON A SUPPORT STRUCTURE, according to claim 5, **characterized in that** the washer (14) with low thickness is integrated in the head of the bolt (1) in correspondence with the lower flat face (13) of the annular extension (10) of the bolt (1).

9. FLOATING JOINT SYSTEM FOR PANELS ON A SUPPORT STRUCTURE, according to claim 1, **characterized in that** in the contact between the lower flat face (13) of the annular extension (10) of the bolt and the flat area of the outer free face of the panel (6) a Teflon-based paint with sliding surface with low or zero friction coefficient is intercalated in said contact.

10. FLOATING JOINT SYSTEM FOR PANELS ON A SUPPORT STRUCTURE, according to claim 9, **characterized in that** the Teflon-based paint is arranged over the flat area in correspondence with the outer free face of the panel (6).

11. FLOATING JOINT SYSTEM FOR PANELS ON A SUPPORT STRUCTURE, according to claim 9, **characterized in that** the Teflon-based paint is arranged in correspondence with the lower flat face (13) of the annular extension (10) of the bolt (1).

12. FLOATING JOINT SYSTEM FOR PANELS ON A SUPPORT STRUCTURE, according to any one of the preceding claims, **characterized in that** the flat area corresponding to the outer free face of the panel (6) occupies a flat portion (11') of the outer free face of the panel (6).

13. FLOATING JOINT SYSTEM FOR PANELS ON A SUPPORT STRUCTURE, according to any one of claims a to 11, **characterized in that** the flat area arranged in correspondence with the outer free face of the panel (6) comprises a flat bottom (11) of a perimeter recess (12) wherein at least the annular extension (10) of the bolt (1) is housed.

14. FLOATING JOINT SYSTEM FOR PANELS ON A SUPPORT STRUCTURE, according to claim 13, **characterized in that** the annular extension (10) of the bolt (1) is leveled with the outer free face of the panels (6).

15. FLOATING JOINT SYSTEM FOR PANELS ON A SUPPORT STRUCTURE, according to any one of the preceding claims, **characterized in that** the confluence of the hole (7) and the outer free face of the panel (6) presents a perimeter chamfering (9) complemented with a perimeter thicknessing (9') established on the junction area between the annular extension (10) and the cylindrical body (2) of the bolt (1).
